# EUROPEAN PATENT APPLICATION

(11) **EP 4 418 787 A1**
(43) Date of publication of application: **21.08.2024**
(21) Application number: 22906074.4
(22) Date of filing: 25.10.2022
(51) Int. Cl.: H04W 72/04

(54) **RESOURCE SCHEDULING METHOD, BASE STATION, UE, ELECTRONIC DEVICE, AND STORAGE MEDIUM**

(30) Priority: 14.12.2021 CN 202111531966
(71) Applicant: ZTE Corporation, Shenzhen, Guangdong 518057 (CN)
(72) Inventor: FEI, Peiyan, Shenzhen, Guangdong 518057 (CN); LI, Qun, Shenzhen, Guangdong 518057 (CN)
(74) Representative: Osterhoff, Utz
(86) International application number: PCT/CN2022/127470
(87) International publication number: WO 2023/109322

(57) **Abstract**

The present application relates to the technical field of mobile communication and discloses a resource scheduling method, a base station, a user equipment (UE), an electronic device and a storage medium. The resource scheduling method is applied to the base station and includes: selecting schedulable resource symbols from the resource symbols in a reserved slot according to interference situation of resource symbols in the reserved slot; selecting several resource symbols from the schedulable resource symbols and generating resource scheduling information of the UE according to uplink and/or downlink throughput requirements of the UE, during a scheduling cycle of the UE; and sending the resource scheduling information to the UE. The resource scheduling information includes information indicating that the several resource symbols are adjusted to uplink and/or downlink resource symbols of the UE.

## Description

### CROSS-REFERENCES TO RELATED APPLICATIONS

The present application claims priority to Chinese Patent Application NO. 202111531966.4, filed on December 14, 2021, the entire contents of which are incorporated herein by reference.

### TECHNICAL FIELD

The present application relates to the technical field of mobile communication, and in particular, to a resource scheduling method, a base station, a user equipment, an electronic device and a storage medium.

### BACKGROUND

In the time division duplexing (TDD) system of the 4G system, proportions of the downlink symbol (DL), gap (GP) and uplink symbol (UL) in a particular subframe have been clearly defined. In addition, if the uplink and downlink resource configuration is desired to be changed, relevant information can only be reconfigured by the upper layer device, and the reconfiguration information is transmitted to the user equipment (UE) through signaling. When the number of terminals in this uplink and downlink resource reconfiguration method is large, the amount of signaling transmission is also very large, which causes a signaling storm.

5G technology has developed rapidly in recent years and has entered a new stage of seeking commercial success. Compared with 4G systems, 5G systems have an architecture that supports more flexible resource allocation. The special slot in the 5G system only defines DL resources and UL resources, and does not specify the GP resource ratio, providing more room for flexible scheduling at the bottom. As the pace of 5G commercialization continues to increase and the number of commercial users increases rapidly, the diversity of commercial scene has also become a trend, which puts forward higher requirements for the frame structure that constrains resource allocation to be adaptively configured according to the scene.

However, there is still no relevant technology in traditional technology that can realize flexible adjustment of uplink and downlink resources according to throughput.

### SUMMARY

The purpose of the embodiments of the present application is to provide a resource scheduling method, a base station, a user equipment (UE), an electronic device, and a storage medium, so that uplink and downlink resources can be flexibly scheduled according to uplink and downlink throughput.

In order to solve the above problems, embodiments of the present application provide a resource scheduling method, applied to the base station, including:
selecting schedulable resource symbols from the resource symbols in a reserved slot according to interference situation of resource symbols in the reserved slot;
selecting several resource symbols from the schedulable resource symbols and
generating resource scheduling information of the UE according to uplink and/or downlink throughput requirements of the UE, during a scheduling cycle of the UE, the resource scheduling information includes information indicating that the several resource symbols are adjusted to uplink and/or downlink resource symbols of the UE; and
sending the resource scheduling information to the UE.

In order to solve the above problems, embodiments of the present application provide a resource scheduling method, applied to the UE, including:
receiving resource scheduling information sent by the base station, the resource scheduling information includes information indicating that several resource symbols are adjusted to uplink and/or downlink resource symbols of the UE;
selecting several resource symbols from schedulable resource symbols according to uplink and/or downlink throughput requirements of the UE;
selecting the schedulable resource symbols from resource symbols in a reserved slot according to interference situation of the resource symbols in the reserved slot; and
determining a frame structure for data transmission according to the resource scheduling information.

Embodiments of the present application also provide a base station, including:
a selection module, configured to select schedulable resource symbols from the resource symbols in a reserved slot according to interference situation of resource symbols in the reserved slot;
a scheduling information generation module, configured to select several resource symbols from the schedulable resource symbols and generate resource scheduling information of the UE according to uplink and/or downlink throughput requirements of the UE, during a scheduling cycle of the UE, the resource scheduling information includes information indicating that the several resource symbols are adjusted to uplink and/or downlink resource symbols of the UE; and
a sending module, configured to send the resource scheduling information to the UE.

Embodiments of the present application also provide a user equipment (UE), including:
a receiving module, configured to receive resource scheduling information sent by a base station, the resource scheduling information includes information indicating that several resource symbols are adjusted to uplink and/or downlink resource symbols of the UE, select several resource symbols from schedulable resource symbols according to uplink and/or downlink throughput requirements of the UE, and select the schedulable resource symbols from resource symbols in a reserved slot according to interference situation of the resource symbols in the reserved slot; and
a frame structure determination module, configured to determine a frame structure for data transmission according to the resource scheduling information.

Embodiments of the present application also provide an electronic device, including:
at least one processor; and
a memory communicated with the at least one processor,
an instruction executable by the at least one processor is stored in the memory and is executed by the at least one processor to allow the at least one processor to perform the resource scheduling method applied to the base station as described above, or to perform the resource scheduling method applied to the UE as described above.

Embodiments of the present application also provide a computer-readable storage medium, a computer program is stored in the computer-readable storage medium, and when the computer program is executed by a processor, the resource scheduling method applied to the base station as described above is implemented, or the resource scheduling method applied to the UE as described above is implemented.

In the embodiments of the present application, first, the schedulable resource symbols is selected from the resource symbols in the reserved slot according to interference situation of resource symbols in the reserved slot. The uplink and downlink throughput of the UE may change due to changes in uplink and downlink service requirements. Therefore, several resource symbols are selected from the schedulable resource symbols according to the uplink and/or downlink throughput requirements, and the uplink and/or downlink scheduling resource information indicating that the resource symbols are adjusted to the uplink and downlink UE is sent to the UE. Compared with sending cell-level frame structure reconfiguration information by the base station, the amount of information sent by the base station can be reduced and the signaling storm can be avoided. In addition, the uplink and downlink resources after scheduling can meet the uplink and downlink throughput requirements, and the uplink and downlink resources can be adaptively adjusted according to the actual uplink and downlink requirements of the UE.

### BRIEF DESCRIPTION OF THE DRAWINGS

One or more embodiments are exemplified by the corresponding drawings, and these illustrative description do not constitute limitations to the embodiments. Elements with the same reference signs in the drawings are represented as similar elements. Unless otherwise stated, the figures in the drawings are not intended to be limited to scale.
FIG. 1 is a flow chart of a resource scheduling method according to an embodiment of the present application.
FIG. 2 is a flow chart of a resource scheduling method according to another embodiment of the present application.
FIG. 3 is a schematic structural diagram of a base station according to an embodiment of the present application.
FIG. 4 is a schematic structural diagram of a user equipment (UE) according to an embodiment of the present application.
FIG. 5 is a schematic structural diagram of an electronic device according to an embodiment of the present application.

### DETAILED DESCRIPTION OF THE EMBODIMENTS

In order to make the purpose, technical solutions and advantages of embodiments of the present application clearer, the embodiments of the present application will be described in detail below in conjunction with the accompanying drawings. However, those skilled in the art can understand that in each embodiment of the present application, many technical details are provided to enable readers to better understand the present application. However, even without these technical details and various changes and modifications based on the following embodiments, the technical solution claimed in the present application can also be implemented.

An embodiment of the present application relates to a resource scheduling method applied to a base station.

In this embodiment, the resource scheduling method includes: selecting schedulable resource symbols from the resource symbols in the reserved slot according to the interference situation of the resource symbols in the reserved slot; selecting several resource symbols from the schedulable resource symbols and generating resource scheduling information of the user equipment (UE) according to the uplink and/or downlink throughput requirements of the UE during the scheduling cycle of the UE; and sending the resource scheduling information to the UE. The resource scheduling information includes information indicating that several resource symbols are adjusted to the uplink and/or downlink resource symbols of the UE.

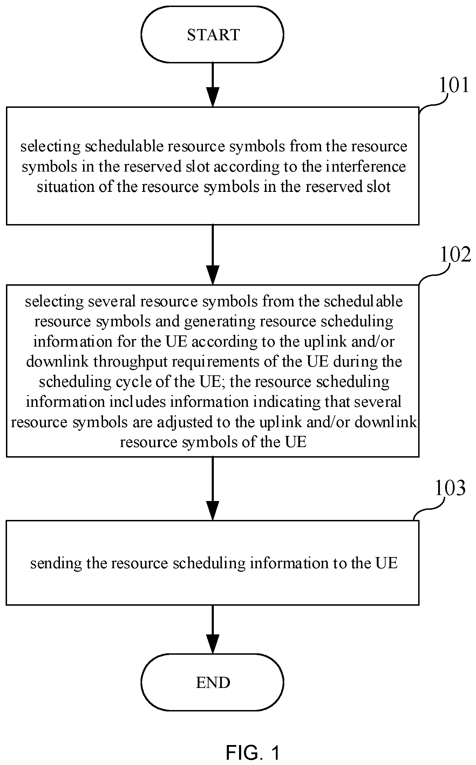

In 5G live network applications, sometimes the uplink and downlink traffic will increase, sometimes the atmospheric waveguide interference will be relatively large, and sometimes the interference caused by the atmospheric waveguide will disappear. These changes will make the current uplink and downlink resource allocation unable to better meet the current actual demand for uplink and downlink resources, which cannot meet the needs of users. In order for the wireless system to better serve users, the frame structure that constrains uplink and downlink throughput needs to have the ability to automatically adjust to improve system service quality. Therefore, the present application provides the following resource scheduling method. The following is a detailed description of the implementation details of the resource scheduling method in this embodiment. The following content is only for the convenience of understanding the implementation details of this solution and is not necessary for implementing this solution. The specific process is shown in FIG. 1, which can include the following steps.

Step 101, selecting schedulable resource symbols from the resource symbols in the reserved slot according to the interference situation of the resource symbols in the reserved slot.

The reserved slot involved in this step can include a special slot. The resource symbols in the reserved slot can include resource symbols that are not clearly defined as UL or DL resource symbols in 5G, that is, flexible resource symbols. In this step, according to the interference situation of the resource symbols in the reserved slot, the resource symbols in the reserved slot whose interference does not reach a preset interference threshold are selected as resource symbols available for scheduling.

In an example, before selecting the schedulable resource symbols from the resource symbols in the reserved slot according to the interference situation of the resource symbols in the reserved slot, the method can also include: calculating interference-related parameters of the resource symbols to determine the interference to the resource symbols in the reserved slot. The interference-related parameters include one or a combination of the following: far-end interference value, neighbor cell interference value, reference signal received power (RSRP), channel quality indicator (CQI), and modulation and coding strategy (MCS). The above interference-related parameters can reflect the interference received by the resource symbols. Therefore, in this example, one or any combination of the above parameters of the resource symbols is calculated to determine the interference received by the resource symbols.

Before this step, the base station can also deliver a frame structure message including the current uplink and downlink resource symbol ratio of the reserved slot to the UE.

Step 102, selecting several resource symbols from the schedulable resource symbols and generating resource scheduling information for the UE according to the uplink and/or downlink throughput requirements of the UE during the scheduling cycle of the UE; the resource scheduling information includes information indicating that several resource symbols are adjusted to the uplink and/or downlink resource symbols of the UE.

Throughput generally refers to the maximum data transmission rate of a device, and uplink and downlink throughput is the maximum rate at which a device can perform upload or download services. It can be understood that the uplink and downlink throughput requirements involved in this step directly reflect the user's demand for upload or download services. Generally speaking, the user's demand for download is greater than the demand for upload, that is, the downlink throughput demand is often greater than the uplink throughput demand. This is also the reason why the number of downlink resource symbols is greater than the number of uplink resource symbols in most frame structures.

In this step, the base station collects statistics on the uplink and downlink throughput requirements of the UE. The statistical results may indicate that the existing allocation of uplink and downlink resource symbols cannot meet the uplink and/or downlink throughput requirements of the UE, that is, the user's upload and/or download service requirements. Therefore, it is necessary to select several resource symbols from the schedulable resource symbols and adjust them to uplink and downlink resource symbols according to the statistical results, that is, to add resource symbols for uplink and/or downlink to meet the uplink and downlink throughput requirements of the UE. In addition, according to the adjustment of the schedulable resource symbols, the resource scheduling information of the UE is generated.

In an example, step 102 can include, in the case where the uplink and/or downlink throughput requirements of the UE are greater than their respective corresponding preset throughput thresholds, determining the number of resource symbols added to the uplink and/or downlink according to the difference between the uplink and/or downlink throughput and the corresponding preset throughput threshold; selecting several resource symbols from the schedulable resource symbols, and generating the resource scheduling information of the UE. In this example, the difference between the uplink and/or downlink throughput and the corresponding preset throughput threshold can be converted into the number of resource symbols that need to be added for the uplink and downlink, and then the corresponding number of resource symbols can be scheduled for the uplink and downlink, ensuring that the uplink and downlink resource ratio after resource symbol scheduling meets the actual uplink and downlink throughput requirements.

In another example, before selecting several resource symbols from the schedulable resource symbols according to the uplink and/or downlink throughput requirements of the UE, the number of the resource symbols corresponding to the guard period (GP) can also be determined according to the other resource requirements of the UE. The other resource requirements include antenna correction requirements. The resource symbols corresponding to the GP can be made to meet other resource requirements of the UE.

In this example, step 102 can include: when the uplink throughput requirement of the UE is greater than the corresponding preset throughput threshold, determining the resource symbols that are close to the number of downlink resource symbols among the schedulable resource symbols as the resource symbols corresponding to the GP; or when the downlink throughput requirement of the UE is greater than the corresponding preset throughput threshold, determining the resource symbols that are close to the number of uplink resource symbols among the schedulable resource symbols as the resource symbols corresponding to the GP; and generating the resource scheduling information of the UE.

When the uplink throughput requirement is greater than the corresponding preset throughput threshold, it means that the current uplink resources cannot meet the actual uplink service requirements of the UE, and resource symbols should be added for the uplink. Therefore, the resource symbols corresponding to the GP, which is the uplink and downlink resource symbol switching point, are determined to be resource symbols close to the downlink resource symbols, that is, it is possible to add resource symbols for the uplink. The same applies when the downlink throughput requirement is greater than the corresponding preset throughput threshold, which will not be described again here.

Step 103, sending the resource scheduling information to the UE.

It is worth mentioning that the resource scheduling information involved in this step can be sent by the base station to the UE through dedicated control information (DCI). This allows the UE to learn the uplink and downlink slots (i.e., uplink and downlink resource symbols) and uplink and downlink resource symbol ratios in the frame structure currently used through DCI.

When the position of the GP and the corresponding resource symbols are determined, the relevant information of the GP can also be written into the resource scheduling information and sent to the UE.

Since the frame structure ratio is a cell-level parameter, once the frame structure needs to be changed, the base station needs to notify all UEs in the cell through a reconfiguration message. When the number of the UEs is relatively large, sending reconfiguration messages to each UE will cause a large increase in the amount of signaling delivered, thus triggering a signaling storm. In this embodiment, the base station only sends the resource scheduling information to the UE. Adjusting the frame structure is left to the UE to determine, thus enhancing the autonomy and real-time response of the underlying scheduling, and indirectly improving system performance. At the same time, it can also reduce the overhead of the UE in processing frame structure reconfiguration information, and accordingly enhance the processing capability of effective data.

In this embodiment, the schedulable resource symbols are selected from the resource symbols in the reserved slot first according to the interference situation of the resource symbols in the reserved slot. The uplink and downlink throughput of the UE may change due to changes in uplink and downlink service requirements. Therefore, several resource symbols are selected from the schedulable resource symbols according to the uplink and/or downlink throughput requirements, and the uplink and/or downlink scheduling resource information indicating that the resource symbols are adjusted to the uplink and downlink UE is sent to the UE. Compared with sending cell-level frame structure reconfiguration information by the base station, the amount of information sent by the base station can be reduced and the signaling storm can be avoided. In addition, the uplink and downlink resources after scheduling can meet the uplink and downlink throughput requirements, and the uplink and downlink resources can be adaptively adjusted according to the actual uplink and downlink requirements of the UE.

Another embodiment of the present application relates to a resource scheduling method applied to a UE. In this embodiment, the resource scheduling method includes: receiving resource scheduling information sent by the base station, the resource scheduling information includes information indicating that a number of resource symbols are adjusted to uplink and/or downlink resource symbols of the UE; selecting a number of resource symbols from the schedulable resource symbols according to the uplink and/or downlink throughput requirements of the UE; selecting the schedulable resource symbols from the resource symbols in the reserved slot according to the interference to the resource symbols in the reserved slot; determining the frame structure for data transmission according to the resource scheduling information.

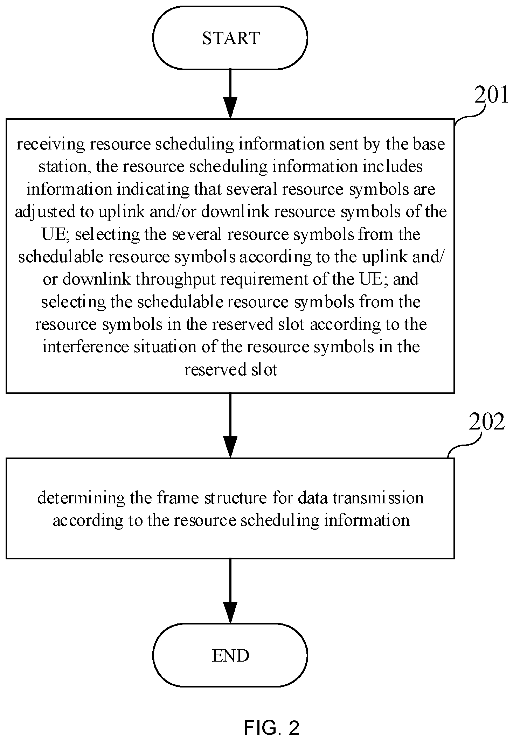

The following is a detailed description of the implementation details of the resource scheduling method in this embodiment. The following content is only for the convenience of understanding the implementation details of this solution and is not necessary for implementing this solution. The specific process is shown in FIG. 2, which can include the following steps.

Step 201, receiving resource scheduling information sent by the base station, the resource scheduling information includes information indicating that several resource symbols are adjusted to uplink and/or downlink resource symbols of the UE; selecting the several resource symbols from the schedulable resource symbols according to the uplink and/or downlink throughput requirement of the UE; and selecting the schedulable resource symbols from the resource symbols in the reserved slot according to the interference situation of the resource symbols in the reserved slot.

Step 202, determining the frame structure for data transmission according to the resource scheduling information.

Since the resource scheduling information includes information indicating that several resource symbols are adjusted to the uplink and/or downlink resource symbols of the UE, the UE can determine the frame structure for data transmission after symbol adjustment according to the resource scheduling information.

It is worth mentioning that, without determining the corresponding number of GP and the position of GP, the UE can indirectly determine the resource symbols corresponding to GP and the position of GP based on the determination of uplink and downlink resource symbols. That is, after the resource symbols are adjusted, the resource symbols between the uplink and downlink resource symbols are all resource symbols corresponding to the GP.

In this embodiment, the resource scheduling information includes information indicating that several resource symbols are adjusted to the uplink and/or downlink resource symbols of the UE, and the resource symbols are adjusted according to the uplink and/or downlink throughput requirements of the UE. The UE first receives the resource scheduling information sent by the base station, and then determines the frame structure for data transmission based on the resource scheduling information. Therefore, the frame structure can be adaptively adjusted according to the uplink and downlink throughput of the UE, and after the frame structure is adjusted, the uplink and downlink resources are scheduled to meet the uplink and downlink business requirements.

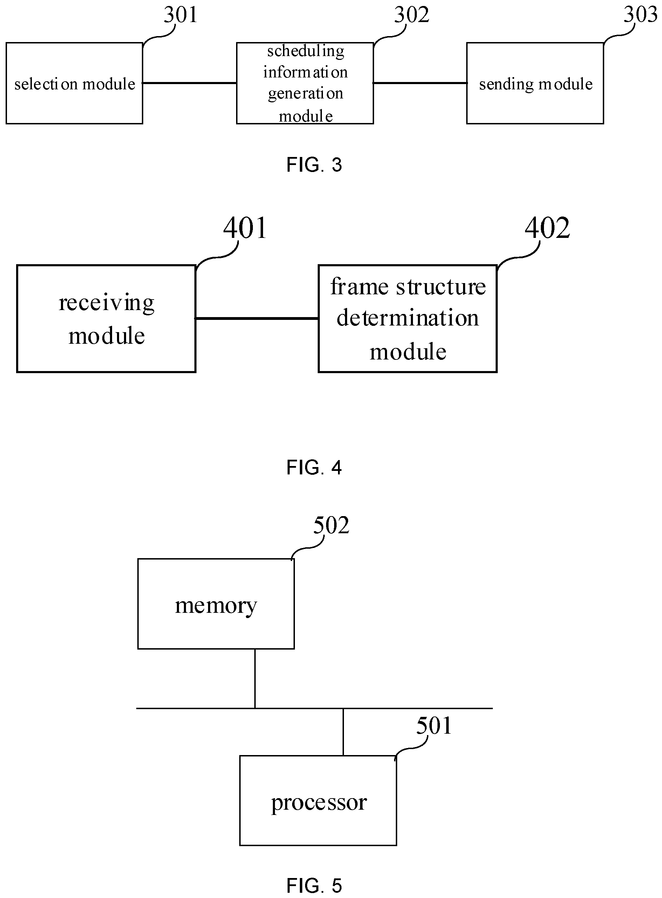

An embodiment of the present application relates to a base station, as shown in FIG. 3, including a selection module 301, a scheduling information generation module 302 and a sending module 303.

The selection module 301 is configured to select schedulable resource symbols from the resource symbols in the reserved slot according to the interference situation of the resource symbols in the reserved slot.

The scheduling information generation module 302 is configured to select several resource symbols from the schedulable resource symbols according to the uplink and/or downlink throughput requirements of the UE during the scheduling cycle of the UE, and generate resource scheduling information for the UE. The resource scheduling information includes information indicating that several resource symbols are adjusted to the uplink and/or downlink resource symbols of the UE.

The sending module 303 is configured to send the resource scheduling information to the UE.

In an example, the scheduling information generation module 302 can also be configured to determine the number of resource symbols added for the uplink and/or downlink according to the difference between the uplink and/or downlink throughput and the corresponding preset throughput threshold, when the uplink and/or downlink throughput requirements of the UE are greater than the corresponding preset throughput thresholds; select a number of resource symbols from the schedulable resource symbols; and generate resource scheduling information for the UE.

In an example, the base station involved in this embodiment can also include a GP number determination module (not shown in the figure), which is configured to determine the number of resource symbols corresponding to the GP according to other resource requirements of the UE, before selecting a number of resource symbols from the schedulable resource symbols according to the uplink and/or downlink throughput requirements of the UE. The other resource requirements include antenna correction requirements.

In an example, the scheduling information generation module 302 can also be configured to, when the uplink throughput requirement of the UE is greater than the corresponding preset throughput threshold, determine the resource symbols that are close to the number of downlink resource symbols among the schedulable resource symbols as the resource symbol corresponding to the GP; or, when the downlink throughput requirement of the UE is greater than the corresponding preset throughput threshold, determine the resource symbols that are close to the number of uplink resource symbols among the schedulable resource symbols as the resource symbol corresponding to the GP; and generate the resource scheduling information of the UE.

In an example, the selection module 301 can also be configured to calculate the interference-related parameters of the resource symbols to determine the interference to the resource symbols in the reserved slot. The interference-related parameters include one and a combination of the following: remote interference value, neighbor cell interference value, RSRP, CQI, and MCS.

The base station provided in this embodiment first selects the schedulable resource symbols from the resource symbols in the reserved slot according to the interference situation of the resource symbols in the reserved slot. The uplink and downlink throughput of the UE may change due to changes in uplink and downlink service requirements. Therefore, several resource symbols are selected from the schedulable resource symbols according to the uplink and/or downlink throughput requirements, and the uplink and/or downlink scheduling resource information indicating that the resource symbols are adjusted to the uplink and downlink UE is sent to the UE. Compared with sending the cell-level frame structure reconfiguration information by the base station, the amount of information sent by the base station can be reduced and the signaling storm can be avoided. In addition, the uplink and downlink resources after scheduling can meet the uplink and downlink throughput requirements, and the uplink and downlink resources can be adaptively adjusted according to the actual uplink and downlink requirements of the UE.

Another embodiment of the present application relates to a UE, as shown in FIG. 4, including a receiving module 401 and a frame structure determination module 402.

The receiving module 401 is configured to receive resource scheduling information sent by the base station. The resource scheduling information includes information indicating that several resource symbols are adjusted to uplink and/or downlink resource symbols of the UE. Several resource symbols are selected from the schedulable resource symbols according to the uplink and/or downlink throughput requirement of the UE. The schedulable resource symbols are selected from the resource symbols in the reserved slot according to the interference to the resource symbols in the reserved slot.

The frame structure determination module 402 is configured to determine the frame structure for data transmission according to the resource scheduling information.

The resource scheduling information includes information indicating that several resource symbols are adjusted to uplink and/or downlink resource symbols of the UE, and the resource symbols are adjusted according to the uplink and/or downlink throughput requirements of the UE. The UE provided in this embodiment can receive the resource scheduling information sent by the base station, and then determine the frame structure for data transmission according to the resource scheduling information. The frame structure can be adaptively adjusted according to the uplink and downlink throughput of the UE, and after the frame structure is adjusted, the uplink and downlink resources are scheduled to meet the uplink and downlink business requirements.

It is worth mentioning that each module involved in the above-mentioned embodiments of the present application is a logical module. In practical applications, a logical unit can be a physical unit, or a part of a physical unit, or in the form of a combination of multiple physical units. In addition, in order to highlight the innovative part of the present application, units that are not closely related to solving the technical problems raised in the present application are not introduced in this embodiment, but this does not mean that other units do not exist in this embodiment.

The embodiment of the present application also provides an electronic device, as shown in FIG. 5, including at least one processor 501, and a memory 502 communicated with the at least one processor 501. An instruction that can be executed by at least one processor 501 is stored in the memory 502, so that the instruction is executed by at least one processor 501 to enable the at least one processor 501 to perform the resource scheduling method applied to the base station described above, or perform the resource scheduling method applied to the UE described above.

The memory 502 and the processor 501 are connected using a bus. The bus can include any number of interconnected buses and bridges. The bus connects various circuits of one or more processors 501 and the memory 502 together. The bus can also connect various other circuits such as peripheral devices, voltage regulators, and power management circuits together, which are all well known in the art and therefore will not be described further herein. The bus interface provides the interface between the bus and the transceiver. A transceiver can be one element or multiple elements, such as multiple receivers and transmitters, providing a unit for communicating with various other devices over a transmission medium. The data processed by the processor 501 is transmitted on the wireless medium through the antenna. Furthermore, the antenna also receives data and transmits the data to the processor 501.

The processor 501 is responsible for managing the bus and general processing, and can also provide various functions, including timing, peripheral interfaces, voltage regulation, power management, and other control functions. The memory 502 can be configured to store data used by the processor 501 when performing operations.

The above-mentioned products can perform the methods provided by the embodiments of the present application, and have corresponding functional modules and beneficial effects for performing the methods. For technical details that are not described in detail in this embodiment, please refer to the methods provided by the embodiments of the present application.

An embodiment of the present application also provides a computer-readable storage medium on which a computer program is stored. When the computer program is executed by the processor, the above resource scheduling method applied to the base station is implemented, or the above resource scheduling method applied to the UE is implemented.

Those skilled in the art can understand that all or part of the steps in the method of the above embodiments can be completed by instructing relevant hardware through a program. The program is stored in a storage medium and includes several instructions to cause a device (which can be a microcontroller, a chip, etc.) or a processor to perform all or part of the steps of the methods in the embodiments of the present application. The aforementioned storage media include various medium on which program code can be stored such as U disk, mobile hard disk, read-only memory (ROM), random access memory (RAM), magnetic disk or optical disk.

The above embodiments are provided for those skilled in the art to implement and use the present application. Those skilled in the art can make various modifications or changes to the above embodiments without departing from the inventive concept of the present application. Therefore, the scope of the present application is not limited to the above embodiments, but is to be accorded the widest scope consistent with the inventive features claimed herein.

## Claims

1. A resource scheduling method, applied to a base station, **characterized by** comprising:
selecting schedulable resource symbols from the resource symbols in a reserved slot according to interference situation of resource symbols in the reserved slot;
selecting several resource symbols from the schedulable resource symbols and generating resource scheduling information of a user equipment (UE) according to uplink and/or downlink throughput requirements of the UE, during a scheduling cycle of the UE, wherein the resource scheduling information comprises information indicating that the several resource symbols are adjusted to uplink and/or downlink resource symbols of the UE; and
sending the resource scheduling information to the UE.

2. The resource scheduling method according to claim 1, wherein selecting the several resource symbols from the schedulable resource symbols and generating the resource scheduling information of the UE according to the uplink and/or downlink throughput requirements of the UE comprises:
in response to that the uplink and/or downlink throughput requirements of the UE are greater than corresponding preset throughput thresholds, determining a number of resource symbols to be added for uplink and/or downlink according to a difference between the uplink and/or downlink throughput and the corresponding preset throughput threshold; and
selecting the number of resource symbols from the schedulable resource symbols, and generating the resource scheduling information for the UE.

3. The resource scheduling method according to claim 1, wherein before selecting several resource symbols from the schedulable resource symbols according to the uplink and/or downlink throughput requirements of the UE, the method further comprises:
determining a number of resource symbols corresponding to a guard period (GP) according to other resource requirements of the UE, wherein the other resource requirements comprise antenna correction requirements.

4. The resource scheduling method according to claim 3, wherein selecting several resource symbols from the schedulable resource symbols and generating the resource scheduling information of the UE according to the uplink and/or downlink throughput requirements of the UE comprises:
in response to that the uplink throughput requirement of the UE is greater than a corresponding preset throughput threshold, determining the number of resource symbols close to downlink resource symbols among the schedulable resource symbols as resource symbols corresponding to the GP; or
in response to that the downlink throughput requirement of the UE is greater than a corresponding preset throughput threshold, determining the number of resource symbols close to uplink resource symbols among the schedulable resource symbols as resource symbols corresponding to the GP; and
generating the resource scheduling information of the UE.

5. The resource scheduling method according to any one of claims 1 to 4, wherein before selecting the schedulable resource symbols from the resource symbols in the reserved slot according to the interference situation of resource symbols in the reserved slot, the method further comprises:
calculating interference-related parameters of the resource symbols to determine the interference situation of the resource symbols in the reserved slot;
wherein the interference-related parameters comprise one of a far-end interference value, a neighbor cell interference value, reference signal received power (RSRP), channel quality indicator (CQI) and a modulation and coding strategy (MCS), and any combination thereof.

6. A resource scheduling method, applied to a user equipment (UE), **characterized by** comprising:
receiving resource scheduling information sent by a base station, wherein the resource scheduling information comprises information indicating that several resource symbols are adjusted to uplink and/or downlink resource symbols of the UE; selecting several resource symbols from schedulable resource symbols according to uplink and/or downlink throughput requirements of the UE; and selecting the schedulable resource symbols from resource symbols in a reserved slot according to interference situation of the resource symbols in the reserved slot; and
determining a frame structure for data transmission according to the resource scheduling information.

7. A base station, **characterized by** comprising:
a selection module, configured to select schedulable resource symbols from the resource symbols in a reserved slot according to interference situation of resource symbols in the reserved slot;
a scheduling information generation module, configured to select several resource symbols from the schedulable resource symbols and generate resource scheduling information of a user equipment (UE) according to uplink and/or downlink throughput requirements of the UE, during a scheduling cycle of the UE, wherein the resource scheduling information comprises information indicating that the several resource symbols are adjusted to uplink and/or downlink resource symbols of the UE; and
a sending module, configured to send the resource scheduling information to the UE.

8. A user equipment (UE), **characterized by** comprising:
a receiving module, configured to receive resource scheduling information sent by a base station, wherein the resource scheduling information comprises information indicating that several resource symbols are adjusted to uplink and/or downlink resource symbols of the UE, select several resource symbols from schedulable resource symbols according to uplink and/or downlink throughput requirements of the UE, and select the schedulable resource symbols from resource symbols in a reserved slot according to interference situation of the resource symbols in the reserved slot; and
a frame structure determination module, configured to determine a frame structure for data transmission according to the resource scheduling information.

9. An electronic device, **characterized by** comprising:
at least one processor; and
a memory communicated with the at least one processor,
wherein an instruction executable by the at least one processor is stored in the memory and is executed by the at least one processor to allow the at least one processor to perform the resource scheduling method according to any one of claims 1 to 5, or to perform the resource scheduling method according to claim 6.

10. A computer-readable storage medium, **characterized in that** a computer program is stored in the computer-readable storage medium, wherein when the computer program is executed by a processor, the resource scheduling method according to any one of claims 1 to 5 is implemented, or the resource scheduling method according to claim 6 is implemented.
